# EUROPÄISCHE PATENTSCHRIFT

(11) **EP 1 989 131 B1**
(45) Veröffentlichungstag und Bekanntmachung des Hinweises auf die Patenterteilung: **09.09.2009**
(21) Anmeldenummer: 06723122.5
(22) Anmeldetag: 27.02.2006
(51) Int. Cl.: B65G 23/44

(54) **SPANNVORRICHTUNG FÜR MINDESTENS EINEN UMLAUFENDEN TRANSPORTSTRANG**
TENSIONING ARRANGEMENT FOR AT LEAST ONE CIRCULATING TRANSPORTING BELT
DISPOSITIF TENDEUR POUR AU MOINS UNE BANDE DE TRANSPORT TOURNANTE

(43) Veröffentlichungstag der Anmeldung: 12.11.2008
(73) Patentinhaber: FESTO AG & Co. KG, 73734 Esslingen (DE)
(72) Erfinder: SCHNATTERER, Jürgen, 72649 Wolfschlugen (DE)
(74) Vertreter: Abel, Martin
(86) Internationale Anmeldenummer: PCT/EP2006/001757
(87) Internationale Veröffentlichungsnummer: WO 2007/098779

(56) Entgegenhaltungen:
- DE-A1- 10 236 018
- DE-A1- 10 327 214
- DE-A1- 19 529 828
- JP-A- 2003 156 108
- US-B1- 6 276 519

## Beschreibung

Die Erfindung betrifft eine Spannvorrichtung für mindestens einen umlaufenden Transportstrang, insbesondere ein in der Druckindustrie eingesetztes Transportband, mit mindestens einer Spanneinheit, die ein vom zu spannenden Transportstrang umschlungenes, von einem Spannelementträger getragenes Spannelement aufweist und die einen fluidbetätigten Spannzylinder enthält, der ein Zylindergehäuse mit einem diesem zugeordneten, zur Abstützung geeigneten Lagerabschnitt und eine durch Fluidbeaufschlagung relativ zu dem Zylindergehäuse verschiebbare, zum Hervorrufen einer den Transportstrang spannenden Spannbewegung auf das Spannelement einwirkende Betätigungseinheit aufweist, wobei die Betätigungseinheit mit einer aus dem Zylindergehäuse herausragenden Betätigungsstange an dem Spannelementträger angreift und wobei das Zylindergehäuse und der Lagerabschnitt Bestandteile einer mit Linearführungsmitteln für den Spannelementträger ausgestatteten Führungseinheit sind, wobei der Spannelementträger sich längsseits neben der Führungseinheit erstreckt und an dieser über die Linearführungsmittel in der Bewegungsrichtung der Betätigungseinheit linear verschiebbar geführt ist.

Die DE 103 27 214 A1 offenbart eine derartige Spannvorrichtung, bei der ein als Spannrolle ausgebildetes Spannelement an einem Spannelementträger sitzt, an dem die Betätigungseinheit eines hydraulischen Spannzylinders angreift, dessen Zylindergehäuse über einen Lagerabschnitt ortsfest abgestützt ist. Durch Fluidbeaufschlagung des Spannzylinders wird ein um das Spannelement umlaufender Riemen unter einer ausreichenden Spannung gehalten, so dass er seiner Aufgabe ordnungsgemäß nachkommen kann. Die zum Spannen des Spannelementes erforderliche Bewegung des Spannelementträgers ist eine Linearbewegung, wobei das Zylindergehäuse des Spannzylinders Bestandteil einer Führungseinheit ist, an der sich der Spannelementträger unter Zwischenschaltung geeigneter Linearführungsmittel in linear verschiebbar geführter Weise abstützen kann. Die Bewegungsrichtung des Spannelementträgers fällt mit der Bewegungsrichtung der Betätigungseinheit zusammen, so dass keine ausladenden Querbewegungen auftreten und eine kompakte, bei Bedarf sehr schlank bauende Spanneinheit realisierbar ist. Die über das Spannelement in den Spannelementträger eingeleiteten Reaktionskräfte des zu spannenden Riemens werden von der Führungseinheit aufgenommen, so dass die Betätigungseinheit von etwaigen Querkräften entlastet und somit die Verschleißanfälligkeit reduziert ist.

Der vorliegenden Erfindung liegt die Aufgabe zugrunde, eine kompakt und einfach aufgebaute Spannvorrichtung für Transportstränge zu schaffen.

Zur Lösung dieser Aufgabe ist vorgesehene, dass das Spannelement auf der der Betätigungsstange axial entgegengesetzten Seite der Führungseinheit platziert ist.

Das bevorzugt als drehbare Spannrolle ausgebildete Spannelement nimmt somit eine Lage auf der der Betätigungsstange axial entgegengesetzten Seite der Führungseinheit ein. Der Spannelementträger ist dann entsprechend um die Führungseinheit herumgeführt. Man erreicht somit eine stabile Führung und Lagerung.

Die Spannvorrichtung kann über nur eine Spanneinheit oder auch über gleichzeitig mehrere, bevorzugt in identischer Weise ausgebildete Spanneinheiten verfügen. In Verbindung mit einer Mehrfachanordnung gewährleistet die Erfindung einen geringen Platzbedarf mit auf Wunsch hoher Anordnungsdichte an Spanneinheiten. Jede der mehreren Spanneinheiten kann individuell für das von den anderen Spanneinheiten unabhängige Spannen eines ihr eigens zugeordneten Transportstranges verantwortlich sein.

Bei dem zu spannenden Transportstrang wird es sich in der Regel um ein flexibles Transportband handeln. Der Einsatz der Spannvorrichtung ist allerdings nicht auf eine bestimmte Transportstrangart beschränkt. Sie kann beispielsweise auch in Verbindung mit seil- oder kettenförmigen Transportsträngen eingesetzt werden.

Vorteilhafte Weiterbildungen der Erfindung gehen aus den Unteransprüchen hervor.

Das Zentrum des Spannelementes liegt vorzugsweise auf der Längsachse der Betätigungseinheit, was für die Krafteinleitung besonders günstig erscheint. Der Spannelementträger erstreckt sich zweckmäßigerweise derart längsseits über die Führungseinheit hinweg, dass er über diese axial beidseits hinausragt. Das Maß des Hinausragens hängt von der aktuellen Relativposition zwischen dem Spannelementträger und der, eventuell in verschwenkbarer Weise, ortsfest abgestützten Führungseinheit ab.

Eine optimale Führung mit geringem Aufwand lässt sich für den Spannelementträger gewährleisten, wenn die Linearführungsmittel zwei in der Verschieberichtung des Spannelementträgers beabstandete Führungszonen bilden, in denen die Linearführungsmittel mit dem Spannelementträger zusammenwirken. Zwischen diesen Führungszonen ist der Spannelementträger zur Vermeidung von Überbestimmungen ungeführt.

Die Führungszonen befinden sich zweckmäßigerweise an zwei axial beabstandeten Führungsblöcken eines Führungskörpers der Führungseinheit, der auch das Zylindergehäuse umfasst. Die beiden Führungsblöcke sind zweckmäßigerweise den beiden Endabschnitten des Zylindergehäuses zugeordnet.

Zur Führung des Spannelementträgers können die Linearführungsmittel eine oder mehrere, im Querschnitt jeweils zweckmäßigerweise U-förmige Führungsnuten bilden, in denen der Spannelementträger zumindest teilweise aufgenommen ist und entlangläuft. Er kann dabei insbesondere von vom Nutgrund und von den Nutflanken der Führungsnut gebildeten Führungsflächen an wenigstens drei Seiten abgestützt sein.

Eine besonders rationelle Herstellung ist möglich, wenn die Linearführungsmittel einstückiger Bestandteil eines auch das Zylindergehäuse beinhaltenden Führungskörpers sind. Hierbei besteht insbesondere auch die Möglichkeit, den Führungskörper als Spritzgießteil- aus Kunststoffmaterial zu fertigen.

Eine optimale Querabstützung für den Spannelementträger ergibt sich, wenn der Spannelementträger nicht nur einseitig an der Führungseinheit vorbeigreift, sondern auf zwei bezüglich der Längsachse der Führungseinheit einander diametral gegenüberliegenden Längsseiten. Der Spannelementträger kann dann im Bereich dieser beiden Längsseiten unter gleichzeitiger Querabstützung an der Führungseinheit linear verschiebbar geführt sein. Zugleich sind kompakte Abmessungen möglich, weil die Führungseinheit von dem Spannelementträger umschlossen sein kann.

Besonders vorteilhaft ist eine Ausgestaltung, bei der der Spannelementträger ein längliches, rahmenförmiges Bauteil ist, das die Führungseinheit umschließt. Die Führungseinheit ist somit platzsparend im Innern des Spannelementträgers untergebracht. Die beiden sich längs der Führungseinheit erstreckenden Rahmenschenkel des Spannelementträgers sind über die erwähnten Linearführungsmittel an der Führungseinheit linear verschiebbar geführt.

Von den beiden sich quer zur Verschieberichtung des Spannelementträgers erstreckenden Querschenkeln ist zweckmäßigerweise einer zur Beaufschlagung durch die Betätigungsstange der Betätigungseinheit und der andere zum Tragen des Spannelementes ausersehen. Gegenüber einer Bauform, bei der die Betätigungsstange an dem gleichzeitig auch das Spannelement tragenden Querschenkel angreift, ergibt sich hier der besondere Vorteil einer Freihaltung der Betätigungsstange von Querkräften auch dann, wenn sie relativ weit aus dem Zylindergehäuse ausgefahren ist.

Der rahmenförmige Spannelementträger lässt sich besonders einfach installierten, wenn er sich aus einem U-förmigen Bügel zusammensetzt, der sich leicht auf die Führungseinheit aufsetzen lässt, und einem die beiden Bügelschenkel an ihren freien Endbereichen verbindenden Querelement. Bügel und Querelement können beispielsweise lösbar miteinander verschraubt sein.

Der Lagerabschnitt der Führungseinheit befindet sich zweckmäßigerweise an dem der Betätigungsstange entgegengesetzten Endbereich. Er kann über eine das Hindurchstecken einer Lagerstange ermöglichende bohrungsartige Lageraufnahme verfügen. Hierbei kann die Führungseinheit entweder drehfest oder drehbeweglich auf der die Lageraufnahme durchsetzenden Lagerstange sitzen.

Das Einspeisen des Betätigungsfluides, insbesondere Druckluft, in das Zylindergehäuse kann durch die Betätigungseinheit hindurch erfolgen, wenn diese mit mindestens einem dafür geeigneten Fluidkanal ausgestattet ist. Das Anschließen der die Druckluft zuführenden Fluidleitung kann hier in vorteilhafter Weise im Bereich derjenigen Stirnseite der Spanneinheit geschehen, an der die Betätigungsstange mit dem Spannelementträger in Antriebsverbindung steht. Selbst bei einer Mehrfachanordnung eng längsseits nebeneinander angeordneter Spanneinheiten ist auf diese Weise eine platzsparende und bequeme Fluidzufuhr möglich.

Nachfolgend wird die Erfindung anhand der beiliegenden Zeichnung näher erläutert. In dieser zeigen:
- Figur 1: in schematischer Darstellung eine Draufsicht einer bevorzugten Bauform der erfindungsgemäßen Spannvorrichtung als Bestandteil einer papierverarbeitenden Anlage oder Maschine,
- Figur 2: einen Schnitt durch die Spannvorrichtung aus Figur 1 im Bereich einer Spanneinheit gemäß Schnittlinie II-II,
- Figur 3: die in Figur 2 abgebildete Spanneinheit in perspektivischer Darstellung, zusammen mit einer sie tragenden stangenförmigen Lagerstruktur, und
- Figur 4: einen Teilbereich der in Figur 3 gezeigten Spannvorrichtung im Querschnitt gemäß Schnittlinie IV-IV.

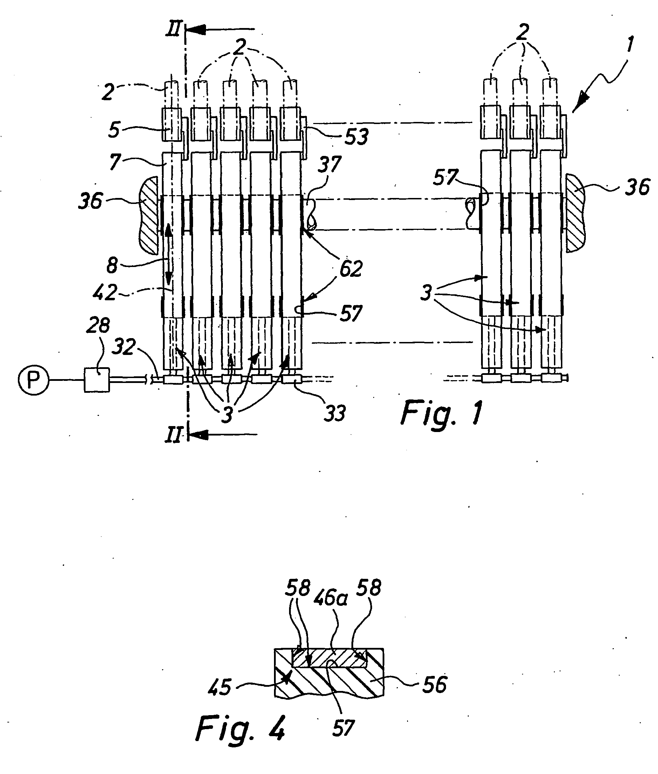

Die in Figur 1 nur im Bereich der erfindungsgemäßen Spannvorrichtung 1 abgebildete Maschine enthält unter anderem eine Vielzahl in Gestalt schmaler Transportbänder ausgebildeter Transportstränge 2, die im Betrieb um jeweils eine Mehrzahl von in der Zeichnung nicht näher dargestellten Umlenkrollen umlaufen. In der Regel ist eine der Umlenkrollen als Antriebsrolle ausgebildet, die durch Reibmitnahme die Umlaufbewegung des in sich geschlossenen Transportstranges 2 hervorrufen kann.

Die Transportstränge 2 sind derart nebeneinander angeordnet, dass sie gemeinsam eine Transportfläche bilden, auf der ein zu transportierender Gegenstand ablegbar ist.

Die Spannvorrichtung 1 ist vor allem für den Einsatz in der papierverarbeitenden Industrie prädestiniert, beispielsweise in Verbindung mit Druckmaschinen und hierbei zum Transport unbedruckter oder bereits bedruckter Papierbögen. Allerdings kann die Spannvorrichtung 1 auch in anderen Techniksparten eingesetzt werden, in denen der Transport von Gegenständen eine Rolle spielt.

Abweichend vom Ausführungsbeispiel können die einzelnen Transportstränge 2 beispielsweise auch als Transportseile oder Transportketten ausgeführt sein.

Um einen reibungslosen Gegenstandstransport zu gewährleisten, bedürfen die Transportstränge 2 einer gewissen Strangspannung. Diese wird durch die Spannvorrichtung 1 aufrecht erhalten.

Die Spannvorrichtung 1 setzt sich aus einer Mehrzahl Seite an Seite nebeneinander angeordneter Spanneinheiten 3 zusammen, von denen in Figur 1 nur einige abgebildet sind. Strichpunktierte Linien sollen den Bereich zeigen, der von den nicht näher gezeigten Spanneinheiten 3 belegt ist.

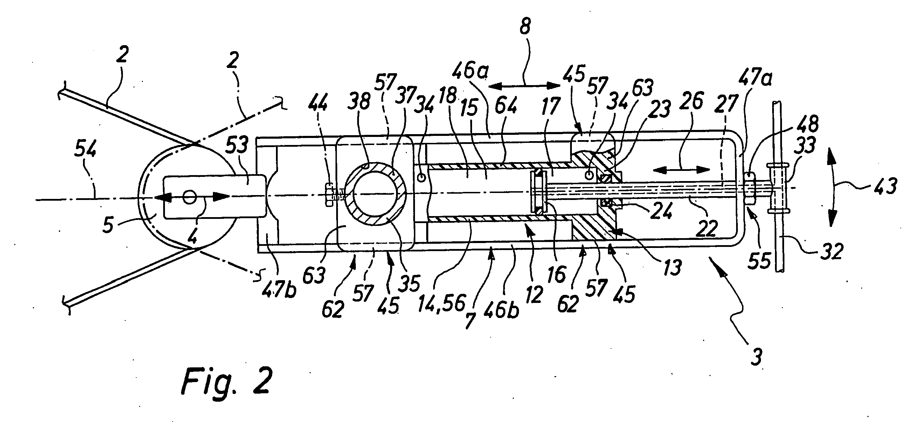

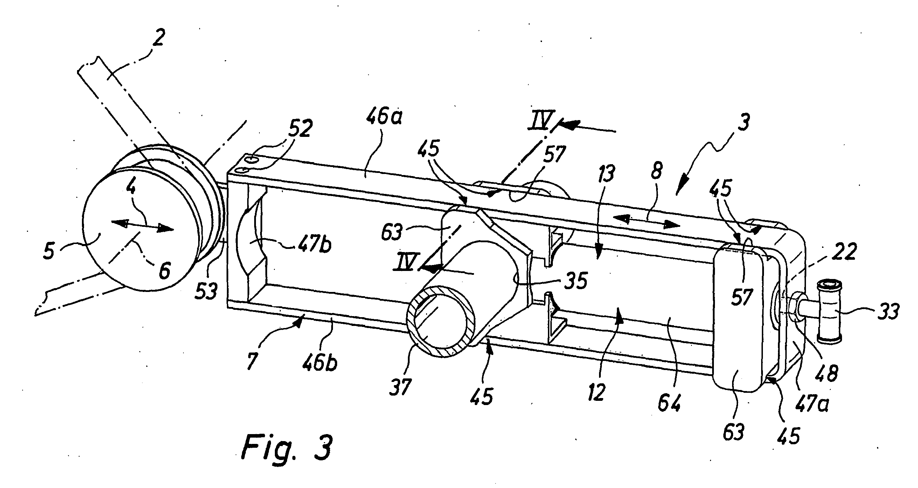

Jede Spanneinheit 3 ist für das individuelle Spannen eines ihr spezifisch zugeordneten Transportstranges 2 verantwortlich. Hierzu umfasst sie ein unter Ausführung einer durch einen Doppelpfeil angedeuteten Spannbewegung 4 bewegliches Spannelement 5, um das der zu spannende Transportstrang 2 gemäß Figuren 2 und 3 herumgeschlungen ist. Bei dem Spannelement 5 handelt es sich vorzugsweise um eine frei drehbare Spannrolle, deren Drehachse 6 rechtwinkelig zu der von dem Transportstrang 2 aufgespannten Umlaufebene verläuft. Alternativ könnte es sich beispielsweise auch um einen einfachen Spannklotz handeln.

Die Spanneinheiten 3 sind zweckmäßigerweise identisch aufgebaut. Somit kann sich die Beschreibung anhand der Figuren 2 bis 4 auf ein Exemplar beschränken. Die diesbezüglichen Ausführungen gelten entsprechend für die anderen Spanneinheiten 3.

Innerhalb einer jeweiligen Spanneinheit 3 ist das S-pannelement 5 von einem Spannelementträger 7 getragen. Dieser ist unter Ausführung einer durch einen Doppelpfeil angedeuteten linearen Arbeitsbewegung 8 relativ zu einer im Betrieb ortsfesten Führungseinheit 12 hin und her verschiebbar.

Die Führungseinheit 12 ist Bestandteil eines in seiner Gesamtheit mit Bezugsziffer 13 versehenen fluidbetätigten Spannzylinders. Obgleich es sich prinzipiell um einen Hydraulikzylinder handeln kann, wird doch eine Ausgestaltung als Pneumatikzylinder vorgezogen, wie dies beim Ausführungsbeispiel der Fall ist.

Eine Komponente der Führungseinheit 12 ist vom Längserstreckung aufweisenden Zylindergehäuse 14 des Spannzylinders 13 gebildet. Dieses definiert einen länglichen Kolbenaufnahmeraum 15, in dem ein Betätigungskolben 16 linear verschiebbar angeordnet ist, der den Kolbenaufnahmeraum 15 unter Abdichtung axial in zwei Arbeitskammern 17, 18 unterteilt. Eine an dem Betätigungskolben 16 befestigte, insbesondere mit einer Kolbenstange vergleichbare Betätigungsstange 22 durchsetzt die erste (17) der beiden Arbeitskammern und anschließend auch die die erste Arbeitskammer 17 stirnseitig begrenzende Abschlusswand 23. Die Betätigungsstange 22 ist relativ zu der Abschlusswand 23 in Längsrichtung verschiebbar. Dichtungsmittel 24 verhindern einen Fluidaustritt.

Die aus Betätigungskolben 16 und Betätigungsstange 22 zusammengesetzte Bewegungseinheit sei im Folgenden als Betätigungseinheit 25 bezeichnet. Sie ist unter Ausführung einer durch einen Doppelpfeil angedeuteten Betätigungsbewegung 26 relativ zum Zylindergehäuse 14 und mithin auch zur Führungseinheit 12 verschiebbar, wobei sie mit ihrer Betätigungsstange 22 positionsabhängig mehr oder weniger weit stirnseitig aus der Führungseinheit 12 herausragt.

Beim Ausführungsbeispiel ist der Spannzylinder 13 ausgelegt, um durch Fluidbeaufschlagung der der Betätigungsstange 22 entgegengesetzten zweiten Arbeitskammer 18 eine ausfahrende Betätigungsbewegung 26 hervorzurufen. Das Betätigungsfluid kann über einen die Betätigungsstange 22 und den Betätigungskolben 16 durchsetzenden Fluidkanal 27 in die zweite Arbeitskammer 18 eingespeist werden. Zugeführt wird das Betätigungsfluid über ein unter Vermittlung einer Steuerventileinrichtung 28 an eine Druckquelle P angeschlossenes Fluidleitungssystem 32, das über eine geeignete Anschlussvorrichtung 33 mit dem die Betätigungseinheit 25 durchsetzenden Fluidkanal 27 kommuniziert. Diese Anschlussvorrichtung 33 ist stirnseitig am freien Ende der Betätigungsstange 22 angebracht. Bei einer Ausführung als T-Stück können sämtliche Spannzylinder 13 der Spannvorrichtung 1 gemeinsam an die Druckquelle P angeschlossen werden (Figur 1).

Wenn es gewünscht ist, eine einfahrende Betätigungsbewegung 26 der Betätigungseinheit 25 durch Fluidbeaufschlagung hervorzurufen, wird ein dahingehender Verlauf des Fluidkanals 27 gewählt, dass dieser positionsunabhängig mit der ersten Arbeitskammer 17 kommuniziert.

Die jeweils nicht zur Fluidbeaufschlagung vorgesehene Arbeitskammer ist zweckmäßigerweise ständig zur Atmosphäre entlüftet. Hierzu kann sie mit einer die Wandung des Zylindergehäuses 14 durchsetzenden Entlüftungsbohrung 34 kommunizieren, die bei Nichtbedarf verschlossen werden kann.

Selbstverständlich kann der Spannzylinder 13 auch als sogenannter doppeltwirkender Arbeitszylinder ausgeführt sein, bei dem beide Arbeitskammer 17, 18 aktiv in gesteuerter Weise mit Betätigungsfluid beaufschlagbar sind.

Der für die Fluidversorgung der Arbeitskammer 17, 18 erforderliche mindestens eine Fluidkanal 27 kann alternativ auch ausschließlich in der Führungseinheit 12 verlaufen. Allerdings ermöglicht die gezeigte Variante besonders kompakte Abmessungen, weil sämtliche fluidischen Anschlussmaßnahmen sich auf eine Stirnseite der Spanneinheit 3 konzentrieren.

Über einen ebenfalls als Bestandteil der Führungseinheit 12 ausgebildeten Lagerabschnitt 35 stützt sich die Führungseinheit 12 ortsfest ab. Die ortsfeste Abstützung folgt bezüglich dem nur angedeuteten Vorrichtungsgestell 36, was zweckmäßigerweise unter Zwischenschaltung einer aus Vollmaterial bestehenden oder hohl ausgebildeten stangenförmigen Lagerungsstruktur 37 geschieht. Bevorzugt besitzt der Lagerabschnitt 35 eine bohrungsartige, durchgehende Lageraufnahme 38, die von der stangenförmigen Lagerungsstruktur 37 durchsetzt ist. Wie abgebildet können sämtliche Spanneinheiten 3 der Spannvorrichtung 1 auf ein und derselben Lagerungsstruktur 37 sitzen.

Die Längsachse der Lageraufnahme 38 verläuft rechtwinkelig zur Längsachse 42 der zugeordneten Spanneinheit 3. Somit können die Spanneinheiten 3 dicht gepackt Seite an Seite längsseits nebeneinanderliegend aufgereiht werden, wie dies in Figur 1 veranschaulicht ist.

Die Lageraufnahme 38 und die Lagerungsstruktur 37 haben beim Ausführungsbeispiel zueinander komplementäre kreisförmige Querschnittskonturen. Dies ermöglicht der Spanneinheit 3 zumindest geringfügige, bei 43 durch einen Doppelpfeil angedeutete Drehbewegungen um die Längsachse der Lagerungsstruktur 37. Sind solche Drehbewegungen 43 unerwünscht, kann durch mindestens eine zwischen der Führungseinheit 12 und der Lagerungsstruktur 37 wirkende Spannschraube 44 eine drehfeste Verbindung erzeugt werden. Alternativ könnte in diesem Fall aber auch eine andere drehfeste Art der Befestigung vorgesehen werden.

Der Spannelementträger 7 erstreckt sich unter anderem längsseits neben der Führungseinheit 12, wobei er an dieser über geeignete Linearführungsmittel 45 derart linear verschiebbar geführt ist, dass die Richtung seiner Arbeitsbewegung 8 mit der Richtung der Betätigungsbewegung 26 der Betätigungseinheit 25 zusammen fällt. Gleichzeitig ist der Spannelementträger 7 derart mit der Betätigungseinheit 25 bewegungsgekoppelt, dass sich eine stets nur einheitlich hin oder her verschiebbare Bewegungseinheit ergibt. Mit anderen Worten wird die Betätigungsbewegung 26 jeweils unmittelbar auf den Spannelementträger 7 zur Ausführung dessen gleichgerichteter Arbeitsbewegung 8 übertragen. Dies hat gleichzeitig die gleichgerichtete Spannbewegung 4 des am Spannelementträgers 7 befestigten Spannelementes 5 zur Folge.

Durch die fluidische Betätigung des Spannzylinders 13 kann somit eine ständige Vorspannung des Transportstranges 2 erreicht werden. Die Fluidkraft arbeitet dabei entgegen der vom Transportstrang 2 ausgeübten Rückstellkraft. Entsprechend der Lage des vom Transportstrang 2 umschlungenen Bereiches des Spannelementes 5 wird durch den Spannzylinder 13 entweder - wie abgebildet - eine Zugkraft auf das Spannelement 5 ausgeübt oder - bei dem in Figur 2 strichpunktiert angedeuteten Transportstrangverlauf - eine Druckkraft. Die Beaufschlagungsrichtung hängt davon ab, welche der Arbeitskammern 17, 18 mit dem Betätigungsfluid gespeist wird.

Der Lagerabschnitt 35 ist zweckmäßigerweise von dem der Betätigungsstange 22 axial entgegengesetzten Endbereich der Führungseinheit 12 gebildet.

Bei dem Spannelementträger 7 handelt es sich vorzugsweise um ein längliches, rahmenförmiges Bauteil, das die Führungseinheit 12 umschließt. Es verfügt über zwei sich in Richtung der Arbeitsbewegung 8 längs der Führungseinheit 12 erstreckende Hauptschenkel 46a, 46b, die auf einander diametral gegenüberliegenden Längsseiten außen an der Führungseinheit 12 vorbeilaufen. Die Führungseinheit 12 ist also von den beiden Hauptschenkeln 46a, 46b auf einander diametral gegenüberliegenden Längsseiten flankiert.

Die beiden Hauptschenkel 46a, 46b sind auch die einzigen Komponenten des Spannelementträgers 7, die über die Linearführungsmittel 45 an der Führungseinheit 12 verschiebbar geführt sind.

Zur Vervollständigung der Rahmenstruktur sind die beiden Hauptschenkel 46a, 46b an ihren einander entgegengesetzten Endbereichen durch einen ersten und zweiten Querschenkel 47a, 47b starr miteinander verbunden.

Der erste Querschenkel 47a liegt der von der Betätigungsstange 22 durchsetzten Stirnseite der Führungseinheit 12 in Richtung der Betätigungsbewegung 26 gegenüber. An ihm ist die Betätigungsstange 22 schub- und druckfest fixiert, insbesondere durch eine Schraubverbindung 48. An dem anderen, zweiten Querschenkel 47b, der der rückseitigen Stirnfläche der Führungseinheit 12 gegenüberliegt, ist das Spannelement 5 angebracht.

Zugunsten einer einfachen Montage sind beim Ausführungsbeispiel die beiden Hauptschenkel 46a, 46b und der erste Querschenkel 47a Bestandteil eines einstückigen U-förmigen Bügelelementes. Der nicht unmittelbar von der Betätigungsstange 22 beaufschlagte zweite Querschenkel 47b ist ein gesondertes Querelement, das die beiden freien Endbereiche der Bügelschenkel miteinander verbindet und mit diesen, beispielsweise über eine Schraubverbindung 52, lösbar fest verbunden ist.

Exemplarisch trägt der zweite Querschenkel 47b eine beispielsweise angeschweißte Haltelasche 53, die in Richtung der Betätigungsbewegung 26 von der Rahmenstruktur wegragt und mit Abstand zu dieser das Spannelement 5 aufweist.

Das Spannelement 5 ist also derart am Spannelementträger 7 angeordnet, dass es auf der der Betätigungsstange 22 axial entgegengesetzten Seite der Führungseinheit 12 liegt. Die Anordnung ist insbesondere so getroffen, dass das beim Ausführungsbeispiel von der Drehachse 6 gebildete Zentrum des Spannelementes 5 auf der Längsachse 54 der Betätigungseinheit 25 liegt, die zweckmäßigerweise auch den Verbindungsbereich 55 zwischen der Betätigungseinheit 25 und dem ersten Querschenkel 47a schneidet.

Im Betrieb der Spanneinheit 3 behält die Führungseinheit 12, abgesehen von eventuellen Schwenkbewegungen 43, ihre Relativposition zur Lagerungsstruktur 37 bzw. zu dem Vorrichtungsgestell 36 stets bei. Jedenfalls bleibt die Relativlage der Führungseinheit 12 bezüglich der Lagerungsstruktur 37 in der Richtung der Längsachse 54 stets konstant. Die Betätigungseinheit 25 bildet zusammen mit dem Spannelementträger 7 und dem Spannelement 5 eine bezüglich der Führungseinheit 12 in Richtung der Längsachse 54 einheitlich bewegbare Bewegungseinheit, die durch die ständige Fluidbeaufschlagung einer der beiden Arbeitskammern 17, 18 andauernd in derjenigen Richtung der Spannbewegung 4 vorgespannt ist, die eine Beaufschlagung des Transportstranges 2 hervorruft. Somit steht der Transportstrang 2 unter ständiger Vorspannung und eventuelle Längsdehnungen des Transportstranges 2 werden unter Ausführung der Spannbewegung 4 automatisch kompensiert.

Aus dem Transportstrang 2 in das Spannelement 5 eingeleitete Querkräfte werden über die Linearführungsmittel 45 direkt in die abgestützte Führungseinheit 12 eingeleitet. Der jenseits der Führungseinheit 12 liegende Verbindungsbereich 55 ist somit von diesen Querkräften entkoppelt und folglich erfährt die Betätigungseinheit 25 praktisch keine Querbelastung, so dass ihr Verschleiß und auch der Verschleiß der vorhandenen Dichtungen auf einem niedrigen Niveau bleibt. Ungünstige Belastungen der Gesamtstruktur werden auch dadurch vermieden, dass sich der Lagerabschnitt 35 in dem von der rahmenartigen Struktur des Spannelementträgers 7 umschlossenen Bereich befindet.

Zweckmäßigerweise ist das Zylindergehäuse 14 ein einstückiger Bestandteil eines insgesamt mit Bezugsziffer 56 bezeichneten Führungskörpers der Führungseinheit 12. Dieser Führungskörper 56 beinhaltet auch, vorzugsweise ebenfalls in einstückiger Weise, die mit dem Spannelementträger 7 kooperierenden Linearführungsmittel 45. Dies lässt sich auf besonders kostengünstige Weise realisieren, wenn der gesamte Führungskörper 56 aus einem stabilen Kunststoffmaterial besteht, wie dies beim Ausführungsbeispiel der Fall ist.

Die Linearführungsmittel 45 enthalten zweckmäßigerweise mehrere in Richtung der Arbeitsbewegung 8 verlaufende und insbesondere einstückig an dem Führungskörper 56 ausgebildete Führungsnuten 57. In diese Führungsnuten 57 greifern die Hauptschenkel 46a, 46b des Spannelementträgers 7 in verschiebbar geführter Weise ein. Jede Führungsnut 57 hat mehrere Führungsflächen 58, die vom Nutgrund und von den beiden Flanken der Führungsnut gebildet sind und an denen sich der jeweils zugeordnete Hauptschenkel 46a, 46b gleitverschieblich abstützen kann. Die vom Nutgrund gebildeten Führungsflächen 58 stützen die beiden Hauptschenkel 46a, 46b jeweils von dem von der Rahmenstruktur umgrenzten Innenraum her ab.

Zweckmäßigerweise ist jeder Hauptschenkel 46a, 46b an zwei in Richtung der Arbeitsbewegung 8 beabstandeten Stellen in einer Führungsnut 57 verschiebbar gelagert. Dem einen und dem anderen Hauptschenkel 46a, 46b zugeordnete Führungsnuten 57 sind dabei jeweils sich paarweise gegenüberliegend in einer Führungszone 62 zusammengefasst, wobei diese Führungszonen 62 in Längsrichtung der Führungseinheit 12 zueinander beabstandet sind.

Vorzugsweise befinden sich die beiden Führungszonen 62 an den beiden axialen Endbereichen der Führungseinheit 12. Sie können dabei wie abgebildet von als einstückige Bestandteile des Führungskörpers 56 ausgebildeten Führungsblöcken 62 gebildet sein, die den Zwischenraum zwischen den beiden Hauptschenkeln 46a, 46b überbrücken und auf einander entgegengesetzten Außenseiten jeweils eine Führungsnut 57 aufweisen. Zwischen den Führungsblöcken 63 erstreckt sich ein rohrartiger Verbindungsabschnitt 64, dessen Breite geringer ist als der Abstand zwischen den beiden Hauptschenkeln 46a, 46b, so dass zwischen den beiden Führungszonen 62 bzw. Führungsblöcken 63 keine Führung der Führungseinheit 12 stattfindet.

Der rohrförmige Verbindungsabschnitt 64 ist von der die beiden Arbeitskammern 17, 18 umfangsseitig begrenzenden Umfangswand des Zylindergehäuses 14 gebildet. Die beiden einstückig damit ausgebildeten Führungsblöcke 63 bilden gleichzeitig die stirnseitigen Abschlusswände des Zylindergehäuses 14.

Es ist von Vorteil, wenn die beiden Hauptschenkel 46a, 46b jeweils mit ihrem gesamten Querschnitt in den zugeordneten Führungsnuten 57 aufgenommen sind. Wie sich gezeigt hat, können die Hauptschenkel 46a, 46b mit einem sehr flachen Querschnitt ausgeführt sein, so dass eine derartige Anordnung problemlos möglich ist. Zweckmäßigerweise haben die Hauptschenkel 46a, 46b jeweils einen rechteckigen Querschnitt, wobei die Führungsnuten 57 mit komplementärer Kontur U-förmig gestaltet sind.

Die Führungsnuten 57 können bei Bedarf mit verschleißfestem Material ausgekleidet bzw. beschichtet sein, beispielsweise Metall.

Bedingt durch den axialen Abstand der beiden Führungszonen 62 ergibt sich insgesamt eine sehr große Führungslänge zwischen dem Spannelementträger 7 und der Führungseinheit 12, was eine optimale Führung und Querabstützung zur Folge hat.

Der Spannelementträger 7 besteht zweckmäßigerweise zumindest im Bereich der beiden Hauptschenkel 46a, 46b und vorzugsweise insgesamt aus Metall, insbesondere aus Stahl.

Die Linearführungsmittel 45 bilden beim Ausführungsbeispiel kostengünstige Gleitführungen. Ist eine besonders hohe Beanspruchung zu erwarten, könnten alternativ auch Wälzführungen vorgesehen werden.

Bei Bedarf kann jede Spanneinheit 3 mit verschleißanzeigemitteln ausgestattet sein, durch die ersichtlich wird, wenn der zugeordnete Transportstrang 2 in Folge zu starker Dehnung verschlissen ist. Die Verschleißanzeigemittel können beispielsweise von berührungslos arbeitenden Sensormitteln gebildet sein, die zwischen einerseits der Führungseinheit 12 und andererseits der Betätigungseinheit 25 oder einer anderen mit der Betätigungseinheit 25 bewegungsgekoppelten Komponente wirksam sind und die ansprechen, wenn zwischen der Führungseinheit 12 und der anderen Komponente eine vorbestimmte Axialposition erreicht ist. Am einfachsten wäre hier der Anbau oder Einbau eines beispielsweise als Reed-Schalter oder Hall-Sensor ausgebildeten Positionssensors an oder in die Führungseinheit 12, der berührungslos auf ein am Betätigungskolben 16 angeordnetes permanentmagnetisches Betätigungselement anspricht.

Die Spanneinheit 3 erweist sich als kostengünstig und wenig Platz beanspruchend. Besonders vorteilhaft ist die Integration der Führungsmaßnahmen für den Spannelementträger 7 in den Spannzylinder, der mithin sowohl für den Antrieb als auch für die Führung des Spannelementträgers 7 und somit auch des Spannelementes 5 verantwortlich ist. Wegen der stabilen Führung und Lagerung kann somit in vorteilhafter Weise auf vom Spannzylinder 13 unabhängige zusätzliche Führungsmittel für den Spannelementträger 7 oder das Spannelement 5 verzichtet werden.

Abweichend vom Ausführungsbeispiel kann die Spannvorrichtung 1 auch nur eine einzige Spanneinheit 3 umfassen.

## Patentansprüche

1. Spannvorrichtung für mindestens einen umlaufenden Transportstrang (2), insbesondere ein in der Druckindustrie eingesetztes Transportband, mit mindestens einer Spanneinheit (3), die ein vom zu spannenden Transportstrang (2) umschlungenes, von einem Spannelementträger (7) getragenes Spannelement (5) aufweist und die einen fluidbetätigten Spannzylinder (13) enthält, der ein Zylindergehäuse (14) mit einem diesem zugeordneten, zur Abstützung geeigneten Lagerabschnitt (35) und eine durch Fluidbeaufschlagung relativ zu dem Zylindergehäuse (14) verschiebbare, zum Hervorrufen einer den Transportstrang (2) spannenden Spannbewegung (4) auf das Spannelement (5) einwirkende Betätigungseinheit (25) aufweist, wobei die Betätigungseinheit (25) mit einer aus dem Zylindergehäuse (14) herausragenden Betätigungsstange (22) an dem Spannelementträger (7) angreift und wobei das Zylindergehäuse (14) und der Lagerabschnitt (35) Bestandteile einer mit Linearführungsmitteln (45) für den Spannelementträger (7) ausgestatteten Führungseinheit (12) sind, wobei der Spannelementträger (7) sich längsseits neben der Führungseinheit (12) erstreckt und an dieser über die Linearführungsmittel (45) in der Bewegungsrichtung (26) der Betätigungseinheit (25) linear verschiebbar geführt ist,
**dadurch gekennzeichnet, dass** das Spannelement (5) auf der der Betätigungsstange (22) axial entgegengesetzten Seite der Führungseinheit (12) platziert ist.

2. Spannvorrichtung nach Anspruch 1, **dadurch gekennzeichnet, dass** das Zentrum des Spannelementes (5) auf der Längsachse (54) der Betätigungseinheit (25) liegt.

3. Spannvorrichtung nach Ansprüch 1 oder 2, **dadurch gekennzeichnet, dass** der Spannelementträger (7) über beide Stirnseiten der Führungseinheit (12) hinausragt, und zwar in Abhängigkeit von der momentanen Relativposition dieser Komponenten (7, 12) in mehr oder weniger weitem Umfang.

4. Spannvorrichtung nach einem der Ansprüche 1 bis 3, **dadurch gekennzeichnet, dass** die Linearführungsmittel (45) zwei in der Bewegungsrichtung des Spannelementträgers (7) beabstandete Führungszonen (62) bilden, zwischen denen der Spannelementträger (7) zweckmäßigerweise ungeführt ist.

5. Spannvorrichtung nach einem der Ansprüche 1 bis 4, **dadurch gekennzeichnet, dass** die Linearführungsmittel (45) mindestens eine Führungsnut (57) bilden, in der der Spannelementträger (7) in verschiebbar geführter Weise entlanglaufen kann.

6. Spannvorrichtung nach Anspruch 5, **dadurch gekennzeichnet, dass** der Spannelementträger (7) von vom Nutgrund und von den Nutflanken einer jeweiligen Führungsnut (57) gebildeten Führungsflächen (58) abgestützt ist.

7. Spannvorrichtung nach einem der Ansprüche 1 bis 6, **dadurch gekennzeichnet, dass** die Linearführungsmittel (45) einstückiger Bestandteil eines auch das Zylindergehäuse (14) beinhaltenden Führungskörpers (56) der Führungseinheit (12) sind.

8. Spannvorrichtung nach Anspruch 7, **dadurch gekennzeichnet, dass** der Führungskörper (56) aus Kunststoffmaterial besteht.

9. Spannvorrichtung nach einem der Ansprüche 1 bis 8, **dadurch gekennzeichnet, dass** die Führungseinheit (12) einen das Zylindergehäuse (14) bildenden Führungskörper (56) enthält, der über zwei axial beabstandete, zu den Linearführungsmitteln (45) gehörende Führungsblöcke (63) verfügt.

10. Spannvorrichtung nach Anspruch 9, **dadurch gekennzeichnet, dass** die Führungsblöcke (63) jeweils mindestens eine Führungsnut (57) für den Spannelementträger (7) bilden.

11. Spannvorrichtung nach einem der Ansprüche 1 bis 10, **dadurch gekennzeichnet, dass** der Spannelementträger (7) ausschließlich an der Führungseinheit (12) verschiebbar gelagert ist.

12. Spannvorrichtung nach einem der Ansprüche 1 bis 11, **dadurch gekennzeichnet, dass** sich der Spannelementträger (7) an zwei einander diametral gegenüberliegenden Längsseiten der Führungseinheit (12) an dieser vorbei erstreckt, wobei er im Bereich dieser beiden Längsseiten jeweils bezüglich der Führungseinheit (12) verschiebbar geführt ist.

13. Spannvorrichtung nach einem der Ansprüche 1 bis 12, **dadurch gekennzeichnet, dass** der Spannelementträger (7) eine längliche, rahmenförmige Struktur aufweist und die Führungeinheit (12) umschließt, wobei er mit seinen beiden sich längs der Führungseinheit (12) erstreckenden Hauptschenkeln (46a, 46b) über die Linearführungsmittel (45) an der Führungseinheit (12) linear verschiebbar gelagert ist.

14. Spannvorrichtung nach Anspruch 13, **dadurch gekennzeichnet, dass** die Betätigungsstange (22) an einem der beiden sich quer zur Verstellrichtung des Spannelementträgers (7) erstreckenden Querschenkeln (47a) des rahmenförmigen Spannelementträgers (7) angreift.

15. Spannvorrichtung nach Anspruch 14, **dadurch gekennzeichnet, dass** das Spannelement (5) an dem nicht von der Betätigurigsstange (22) beaufschlagten anderen Querschenkel (47b) des rahmenförmigen Spannelementträgers (7) angeordnet ist.

16. Spannvorrichtung nach einem der Ansprüche 13 bis 15, **dadurch gekennzeichnet, dass** der Spannelementträger (7) aus einem U-förmigen Bügelelement und einem die beiden Bügelschenkel an ihren freien Endbereichen miteinander verbindenden gesonderten Querelement zusammengesetzt ist.

17. Spannvorrichtung nach einem der Ansprüche 1 bis 16, **dadurch gekennzeichnet, dass** der Lagerabschnitt (35) an dem der Betätigungsstange (22) entgegengesetzten Endbereich der Führungseinheit (12) angeordnet ist.

18. Spannvorrichtung nach einem der Ansprüche 1 bis 17, **dadurch gekennzeichnet, dass** der Lagerabschnitt (35) eine das Hindurchstecken einer stangenförmigen Lagerstruktur (37) ermöglichende bohrungsartige Lageraufnahme (38) aufweist.

19. Spannvorrichtung nach einem der Ansprüche 1 bis 18, **dadurch gekennzeichnet, dass** die Betätigungseinheit (25) von mindestens einem ihrer Fluidbeaufschlagung dienenden Fluidkanal (27) axial durchsetzt ist.

20. Spannvorrichtung nach einem der Ansprüche 1 bis 19, **dadurch gekennzeichnet, dass** das Spannelement (5) eine drehbar gelagerte Spannrolle ist.

21. Spannvorrichtung nach einem der Ansprüche 1 bis 20, **gekennzeichnet durch** eine Mehrzahl von Seite an Seite längsseits nebeneinander angeordneten Spanneinheiten (3).

22. Spannvorrichtung nach Anspruch 21, **dadurch gekennzeichnet, dass** die Mehrzahl von Spanneinheiten (3) über ihre Lagerabschnitte (35) gemeinsam an einer zweckmäßigerweise stangenförmigen Lagerstruktur (37) abgestützt sind.

23. Spannvorrichtung nach Anspruch 22, **dadurch gekennzeichnet, dass** die Spanneinheiten (3) an der Lagerstruktur (37) unabhängig voneinander verschwenkbar gelagert sind.

24. Spannvorrichtung nach einem der Ansprüche 21 bis 23, **dadurch gekennzeichnet, dass** die Spannzylinder (13) mehrerer Spanneinheiten (3) gemeinsam an ein das Betätigungsfluid zuführendes Fluidleitungssystem (32) angeschlossen sind.

## Claims

1. Tensioning device for at least one circulating conveyor strand (2), in particular a conveyor belt used in the printing industry, with at least one tensioning unit (3) which has a tensioning element (5), supported by a tensioning element support (7) and embraced by the conveyor strand (2) to be tensioned, and contains a fluid-actuated tensioning cylinder (13) which has a cylinder housing (14) with an assigned bearing section (35) suitable for support and an actuating unit (25) able to slide relative to the cylinder housing (14) due to fluid pressurisation and acting on the tensioning element (5) to generate a tensioning movement (4) tensioning the conveyor strand (2), wherein the actuating unit (25) acts on the tensioning element support (7) with an actuating rod (22) extending out of the cylinder housing (14), and wherein the cylinder housing (14) and the bearing section (35) are integral parts of a guidance unit (12) equipped with linear guidance means (45) for the tensioning element support (7), wherein the tensioning element support (7) extends alongside the guidance unit (12), where it is guided over the linear guidance means (45) in the direction of movement (26) of the actuating unit (25) with a linear sliding capability, **characterised in that** the tensioning element (5) is located on the side of the guidance unit (12) axially opposite the actuating rod (22).

2. Tensioning device according to claim 1, **characterised in that** the centre of the tensioning element (5) lies on the longitudinal axis (54) of the actuating unit (25).

3. Tensioning device according to claim 1 or 2, **characterised in that** the tensioning element support (7) extends over both end faces of the guidance unit (12), namely to a greater or lesser extent depending on the momentary relative position of these components (7, 12).

4. Tensioning device according to any of claims 1 to 3, **characterised in that** the linear guidance means (45) form two guidance zones (62), spaced apart in the direction of movement of the tensioning element support (7), between which the tensioning element support (7) is expediently unguided.

5. Tensioning device according to any of claims 1 to 4, **characterised in that** the linear guidance means (45) form one or more guide slots (57), in which the tensioning element support (7) can run with sliding guidance.

6. Tensioning device according to claim 5, **characterised in that** the tensioning element support (7) is supported by guide surfaces (58) formed by the slot base and slot sides of each guide slot (57).

7. Tensioning device according to any of claims 1 to 6, **characterised in that** the linear guidance means (45) are an integral part of a guide body (56) of the guidance unit (12) which also contains the cylinder housing (14).

8. Tensioning device according to claim 7, **characterised in that** the guide body (56) is made of plastic material.

9. Tensioning device according to any of claims 1 to 9, **characterised in that** the guidance unit (12) contains a guide body (56) forming the cylinder housing (14) and which has two guide blocks (63), spaced axially apart and belonging to the linear guidance means (45).

10. Tensioning device according to claim 9, **characterised in that** each of the guide blocks (63) forms a guide slot (57) for the tensioning element support (7).

11. Tensioning device according to any of claims 1 to 10, **characterised in that** the tensioning element support (7) is slidably mounted solely on the guidance unit (12).

12. Tensioning device according to any of claims 1 to 11, **characterised in that** the tensioning element support (7) extends past two diametrically opposite side walls of the guidance unit (12), wherein it is in each case guided slidably in the area of these two side walls relative to the guidance unit (12).

13. Tensioning device according to any of claims 1 to 12, **characterised in that** the tensioning element support (7) has an oblong frame-like structure and encompasses the guidance unit (12), wherein it is mounted with linear sliding capability over the linear guidance means (45) on the guidance unit (12) by its two main members (46a, 46b) extending along the guidance unit (12).

14. Tensioning device according to claim 13, **characterised in that** the actuating rod (22) acts on one of the two transverse members (47a) of the frame-like tensioning element support (7) extending at right-angles to the direction of adjustment of the tensioning element support (7).

15. Tensioning device according to claim 14, **characterised in that** the tensioning element (5) is provided on the other transverse member (47b) of the frame-like tensioning element support (7) on which the actuating rod (22) does not act.

16. Tensioning device according to any of claims 13 to 15, **characterised in that** the tensioning element support (7) is comprised of a U-shaped bow element and a transverse element connecting the two bow limbs at their free ends.

17. Tensioning device according to any of claims 1 to 16, **characterised in that** the bearing section (35) is provided on the end section of the guidance unit (12) opposite the actuating rod (22).

18. Tensioning device according to any of claims 1 to 17, **characterised in that** the bearing section (35) has a bore-like bearing location (38) which allows the passing through of a rod-like bearing structure (37).

19. Tensioning device according to any of claims 1 to 18, **characterised in that** one or more fluid passages (27) providing for fluid pressurisation pass axially through the actuating unit (25).

20. Tensioning device according to any of claims 1 to 19, **characterised in that** the tensioning element (5) is a rotatably mounted tensioning roller.

21. Tensioning device according to any of claims 1 to 20, **characterised by** a multiplicity of tensioning units (3) arranged longitudinally side by side.

22. Tensioning device according claim 21, **characterised in that** the multiplicity of tensioning units (3) are supported together on a bearing structure (37) which is expediently rod-like.

23. Tensioning device according to claim 22, **characterised in that** the tensioning units (3) are mounted on the bearing structure (37) with the ability to pivot independently of one another.

24. Tensioning device according to any of claims 21 to 23, **characterised in that** the tensioning cylinders (13) of several tensioning units (3) are connected jointly to a fluid line system (32) which supplies the actuating fluid.

## Revendications

1. Dispositif tendeur pour au moins une bande de transport (2) tournante, en particulier une bande de transport utilisée dans l'imprimerie, avec au moins une unité tendeuse (3) qui présente un élément tendeur (5) entouré par la bande de transport (2) à tendre et porté par un support d'élément tendeur (7), et qui contient un vérin tendeur (13) actionné par un fluide, lequel présente un boîtier de vérin (14) avec une section de soutien (35) associée à celui-ci et convenant pour un soutien et une unité d'actionnement (25) mobile par rapport au boîtier de vérin (14) par exposition à un fluide et agissant sur l'élément tendeur (5) pour provoquer un mouvement de tension (4) tendant la bande de transport (2), dans lequel l'unité d'actionnement (25) se met en prise sur le support d'élément tendeur (7) avec une tige d'actionnement (22) sortant du boîtier de vérin (14), et dans lequel le boîtier de vérin (14) et la section de soutien (35) font partie d'une unité de guidage (12) équipée de moyens de guidage linéaire (45) pour le support d'élément tendeur (7), dans lequel le support d'élément tendeur (7) s'étend longitudinalement sur le côté de l'unité de guidage (12) et est guidé de manière mobile linéairement sur celle-ci par l'intermédiaire des moyens de guidage linéaire (45), dans la direction de déplacement (26) de l'unité d'actionnement (25),
**caractérisé en ce que** l'élément tendeur (5) est placé du côté de l'unité de guidage (12) axialement opposé à la tige d'actionnement (22).

2. Dispositif tendeur selon la revendication 1, **caractérisé en ce que** le centre de l'élément tendeur (5) est situé sur l'axe longitudinal (54) de l'unité d'actionnement (25).

3. Dispositif tendeur selon la revendication 1 ou 2, **caractérisé en ce que** le support d'élément tendeur (7) fait saillie par rapport aux deux faces frontales de l'unité de guidage (12), sur une distance plus ou moins grande en fonction de la position relative momentanée de ces composants (7, 12).

4. Dispositif tendeur selon l'une des revendications 1 à 3, **caractérisé en ce que** les moyens de guidage linéaire (45) forment deux zones de guidage (62) espacées dans la direction de déplacement du support d'élément tendeur (7), entre lesquelles le support d'élément tendeur (7) est, de manière avantageuse, non guidé.

5. Dispositif tendeur selon l'une des revendications 1 à 4, **caractérisé en ce que** les moyens de guidage linéaire (45) forment au moins une rainure de guidage (57) dans laquelle le support d'élément tendeur (7) peut circuler de manière coulissante et guidée.

6. Dispositif tendeur selon la revendication 5, **caractérisé en ce que** le support d'élément tendeur (7) est soutenu par des surfaces de guidage (58) formées par le fond de rainure et par les flancs de rainure d'une rainure de guidage (57) respective.

7. Dispositif tendeur selon l'une des revendications 1 à 6, **caractérisé en ce que** les moyens de guidage linéaire (45) font partie de manière solidaire d'un corps de guidage (56) de l'unité de guidage (12) contenant également le boîtier de vérin (14).

8. Dispositif tendeur selon la revendication 7, **caractérisé en ce que** le corps de guidage (56) est constitué d'un matériau synthétique.

9. Dispositif tendeur selon l'une des revendications 1 à 8, **caractérisé en ce que** l'unité de guidage (12) contient un corps de guidage (56) formant le boîtier de vérin (14), qui dispose de deux blocs de guidage (63) espacés axialement et appartenant aux moyens de guidage linéaire (45).

10. Dispositif tendeur selon la revendication 9, **caractérisé en ce que** les blocs de guidage (63) forment chacun au moins une rainure de guidage (57) pour le support d'élément tendeur (7).

11. Dispositif tendeur selon l'une des revendications 1 à 10, **caractérisé en ce que** le support d'élément tendeur (7) est monté coulissant exclusivement sur l'unité de guidage (12).

12. Dispositif tendeur selon l'une des revendications 1 à 11, **caractérisé en ce que** le support d'élément tendeur (7) s'étend, au niveau de deux côtés longitudinaux diamétralement opposés de l'unité de guidage (12), en passant devant celle-ci, en étant guidé de manière coulissante à chaque fois par rapport à l'unité de guidage (12) au niveau de ces deux côtés longitudinaux.

13. Dispositif tendeur selon l'une des revendications 1 à 12, **caractérisé en ce que** le support d'élément tendeur (7) présente une structure oblongue en forme de cadre et enserre l'unité de guidage (12), en étant monté de manière mobile linéairement sur l'unité de guidage (12) avec ses deux branches principales (46a, 46b) s'étendant le long de l'unité de guidage (12), par l'intermédiaire des moyens de guidage linéaire (45).

14. Dispositif tendeur selon la revendication 13, **caractérisé en ce que** la tige d'actionnement (22) se met en prise sur l'une des deux branches transversales (47a) du support d'élément tendeur (7) en forme de cadre s'étendant transversalement à la direction de déplacement du support d'élément tendeur (7).

15. Dispositif tendeur selon la revendication 14, **caractérisé en ce que** l'élément tendeur (5) est placé sur l'autre branche transversale (47b) du support d'élément tendeur (7) en forme de cadre non sollicitée par la tige d'actionnement (22).

16. Dispositif tendeur selon l'une des revendications 13 à 15, **caractérisé en ce que** le support d'élément tendeur (7) est composé d'un élément en arceau en forme de U et d'un élément transversal distinct reliant entre elles les deux branches d'arceau au niveau de leurs zones d'extrémité libre.

17. Dispositif tendeur selon l'une des revendications 1 à 16, **caractérisé en ce que** la section de soutien (35) est placée au niveau de la zone d'extrémité de l'unité de guidage (12) opposée à la tige d'actionnement (22).

18. Dispositif tendeur selon l'une des revendications 1 à 17, **caractérisé en ce que** la section de soutien (35) présente un logement de soutien (38) de type perçage permettant l'insertion d'une structure de soutien (37) en forme de tige.

19. Dispositif tendeur selon l'une des revendications 1 à 18, **caractérisé en ce que** l'unité d'actionnement (25) est traversée axialement par au moins un canal de fluide (27) servant à sa sollicitation par le fluide.

20. Dispositif tendeur selon l'une des revendications 1 à 19, **caractérisé en ce que** l'élément tendeur (5) est un rouleau tendeur monté rotatif.

21. Dispositif tendeur selon l'une des revendications 1 à 20, **caractérisé par** une pluralité d'unités tendeuses (3) placées les unes à côté des autres longitudinalement.

22. Dispositif tendeur selon la revendication 21, **caractérisé en ce que** la pluralité d'unités tendeuses (3) est soutenue en commun, par l'intermédiaire de leurs sections de soutien (35), sur une structure de soutien (37) avantageusement en forme de tige.

23. Dispositif tendeur selon la revendication 22, **caractérisé en ce que** les unités tendeuses (3) sont montés pivotantes indépendamment les unes des autres sur la structure de soutien (37).

24. Dispositif tendeur selon l'une des revendications 21 à 23, **caractérisé en ce que** les vérins tendeurs (13) de plusieurs unités tendeuses (3) sont raccordés en commun à un système de conduites de fluide (32) amenant le fluide d'actionnement.
